# EUROPÄISCHE PATENTSCHRIFT

(11) **EP 0 392 234 B1**
(45) Veröffentlichungstag und Bekanntmachung des Hinweises auf die Patenterteilung: **25.01.1995**
(21) Anmeldenummer: 90105534.3
(22) Anmeldetag: 23.03.1990
(51) Int. Cl.: F16L 37/14

(54) **Durch Roboter bedienbare Schnellkupplung, insbesondere für flüssigmediumführende Schläuche zur Verbindung an Kühler oder gleichartige Aggregate**
Quick acting coupling operable by robots, especially for liquid containing hoses for the connection with radiators or similar aggregates
Raccord rapide actionné par robots, notamment pour tuyaux souples guide-liquide pour la connexion avec radiateurs ou agrégats similaires

(30) Priorität: 11.04.1989 DE 8904555 U
(43) Veröffentlichungstag der Anmeldung: 17.10.1990
(73) Patentinhaber: Hutchinson Gummiwarenfabrik GmbH, D-68169 Mannheim (DE)
(72) Erfinder: Hartl, Alfred, Ing.(grad.), D-6700 Ludwigshafen (DE); Moreno Molinillo, Jesus, Dipl.-Ing.(FH), D-6944 Hemsbach (DE)
(74) Vertreter: Schmid, Rudolf, Dipl.-Ing., Patentanwalt

(56) Entgegenhaltungen:
- EP-A- 0 072 889
- EP-A- 0 264 010
- DE-A- 1 475 643
- DE-A- 3 126 405
- DE-U- 8 027 191
- FR-A- 2 454 074
- GB-A- 2 072 792
- US-A- 4 059 295

## Beschreibung

Die Erfindung betrifft eine Schnellkupplung zur Verbindung von flüssigmediumführenden Schläuchen an Kühler oder gleichartige Aggregate gemäß dem Oberbegriff des Anspruchs 1. Eine solche Kupplung ist aus FR-A-2454074 bekannt.

Bekannterweise werden Schläuche mittels Schlauchbindern an Kühlerstutzen oder gleichartige Aggregatselemente angeschlossen. Auch sind Verbindungsmechanismen bekannt, bei denen der sogenannte Bajonettverschluß zum Einsatz kommt.

All diese Ausbildungsformen weisen einerseits eine wesentliche zeitaufwendige Verbindungsart oder unzureichende Dichteigenschaften im Verbindungsbereich auf. Insbesondere dort, wo enge Platzverhältnisse sind, dies ist gerade dort, wo der Heizungstauscher im Inneren des Fahrzeuggestells angebracht ist, ist es nicht möglich mit einem Schraubenzieher zu hantieren. Ferner sind die bekannten Ausbildungsformen nicht dazu geeignet, mittels eines Industrieroboters bedient zu werden, wie dies vorzugsweise in der Automobilindustrie gefordert ist.

Der vorliegenden Erfindung liegt daher die Aufgabe zugrunde, eine Kupplung für solche Anwendungsbereiche zu schaffen, die neben einer schnellen Montage eine zufriedenstellende Dichtwirkung aufweisen, sowie unabhängig von den gegebenen Platzverhältnissen ist und dabei die Bedienbarkeit durch Industrieroboter aufweist.

Diese Aufgabe wird gemäß den kennzeichnenden Merkmalen des Anspruchs 1 gelöst.

Besondere Ausführungsformen sind in den abhängigen Ansprüchen gekennzeichnet.

Anhand den beigefügten Zeichnungen, die besondere Ausführungsbeispiele der Erfindung zeigen wird diese nun näher erläutert.

Dabei zeigen:
- Figur 1: eine perspektivische Explosionsdarstellung einer geradlinigen Ausführungsform;
- Figur 2: eine Schnittdarstellung gemäß Figur 1 und
- Figur 3: eine Ausführungsform als Winkelstück.

Die Schnellkupplung 1 besteht im wesentlichen aus einem rohrförmigen Grundkörper 2, auf dem der Mediumschlauch 3 aufgeschoben ist. Hierzu weist der Grundkörper 2 einen Absatz 17 auf. Mittels der Fase 22 geht dieser Absatz 17 in einen Muffenkörper 16 über, wobei der Mediumschlauch 3 geringfügig mit dem Maß "x" von Fasenbeginn beabstandet ist. Sodann wird eine Hülle 4, die den Grundkörper 2 und den Mediumschlauch 3 umgibt, aufgespritzt.

In dem zum Aggregat 5 hinweisenden Kopfbereich 6 des Grundkörpers 2 ist eine die Wandung 7 beidseitig durchbrechende Schlitzung 8 zur Aufnahme einer Spange 9 vorgesehen, die ein in den Grundkörper 2 koaxial eingeführtes Adapterstück 20 umgreift.

Dies ist möglich, da die Spange 9 aus Draht als elastischer Einsteckbügel ausgebildet ist, dessen lichtes Innenmaß 19 im elastischen Bereich geringer ist als der Durchmesser des Absatzes 11, der den Innenumfang 10 im Kopfbereich 6 des Grundkörpers 2 bestimmt.

In diesem Bereich ist ein Dichtelement 12, vorzugsweise ein O-Ring eingesetzt und mittels Sicherungsscheibe 13 auf dem Absatz 11 gehalten. Zwischen dem Absatz 11 und dem Nennweitendurchmesser 14 ist ein weiterer Absatz 15 vorgesehen.

Das Adapterstück 20, das auf den Kühlerstutzen 5 aufgesetzt und koaxial in die Schnellkupplung 1 eingeführt wird, weist zur Aufnahme der Spange 9 eine entsprechende Eindrehung 21 auf.
Dieses Adapterstück 20 ist entweder ein Bestandteil der Schnellkupplung oder ein am Aggregat angeordnetes verwendbares Element.

Der Grundkörper als auch die angespritzte Hülle ist vorzugsweise aus faserverstärkten Polypropylen oder Polyamid geschaffen. Bei faserverstärktem Material hat sich 30 %ig glasfaserverstärktes Polypropylen als vorteilhaft erwiesen.

Die Scheibe 13 ist vorzugsweise aus Polyamid geschaffen.

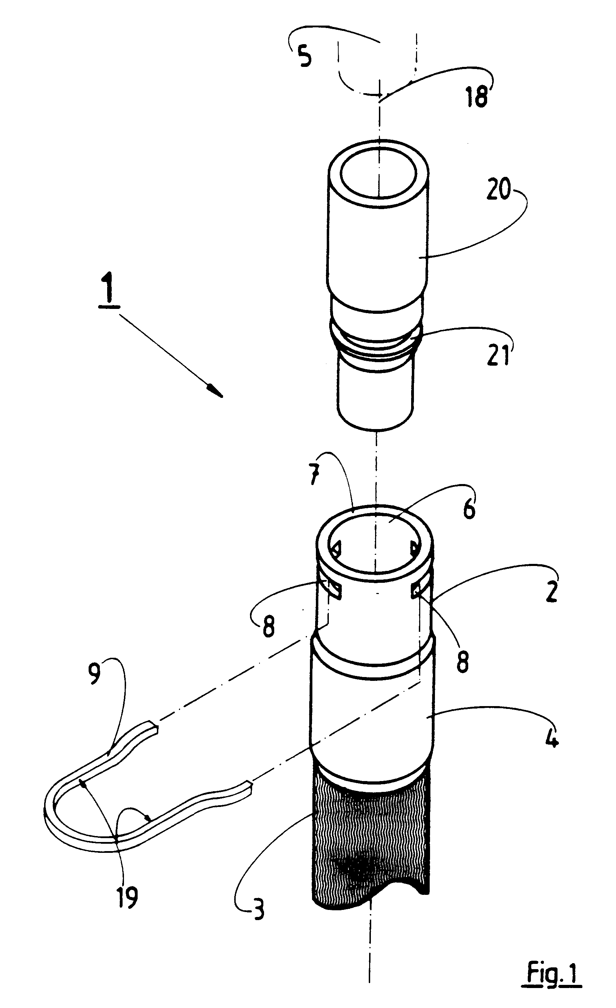

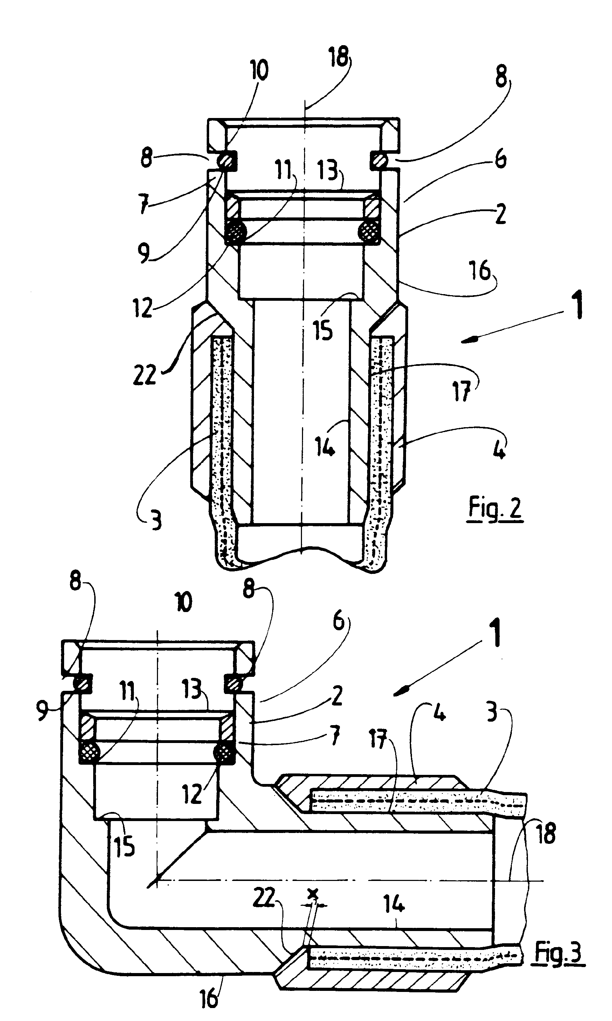

Figur 3 zeigt eine Ausführung der erfindungsgemäßen Schnellkupplung 1 in der Form eines Winkelstücks. Im Sinne dieser Erfindung liegen auch Ausführungsformen, deren Strömungsachse, wie in Figur 1 und 2 gezeigt, geradlinig oder alle möglichen Winkelstellungen aufweisen.

Mit der vorliegenden Erfindung wird eine Kupplung bereitgestellt, mit der auf schnellste Weise eine Verbindung zwischen Aggregat und mediumführendem Schlauch ermöglicht wird, wobei eingeengte Platzverhältnisse aufgrund der vorliegenden Erfindung unberücksichtigt bleiben können und die Montage mittels eines ndustrieroboters gewährleistet ist.

## Patentansprüche

1. Schnellkupplung (1) für einen flüssigmediumführenden Schlauch (3) zur Verbindung an einen Kühler oder ein gleichartiges Aggregat, bestehend aus einem rohrförmigen Grundkörper (2), dem mit diesem verbundenen Schlauch (3), einem im Kopfbereich (6) des Grundkörpers (2) koaxial eingeführten, mit einem Dichtelement abgedichteten Adapterstück (20), sowie einer, eine in Aufsteckrichtung vordere Erweiterung aufweisenden Spange (9), zu deren Aufnahme die Wandung des Kopfbereichs (6) einen beidseitig durchbrechenden Schlitz (8) aufweist und welche in Sperrstellung durch die Schlitzung (8) in eine Eindrehung (21) des Adapterstücks (20) eingreift,
dadurch gekennzeichnet,
daß der Schlauch (3) auf den Grundkörper (2) aufgeschoben und von einer aufgespritzten Hülle (4) umgeben ist und daß die Spange (9) als U-förmiger, elastischer Einsteckbügel ausgebildet ist, dessen beide Schenkel ausgehend von einem lichten Innenmaß (19) erweitert sind.

2. Schnellkupplung nach Anspruch 1,
dadurch gekennzeichnet,
daß im Innenumfang (10) des Kopfbereich (6) des Grundkörpers (2) ein den Nennweitendurchmesser (14) vergrößernder Absatz (11) zur Aufnahme eines Dichtelementes (12) und einer Sicherungsscheibe (13) angeordnet ist.

3. Schnellkupplung nach Anspruch 2,
dadurch gekennzeichnet,
daß zwischen Absatz (11) und Nennweitendurchmesser (14) des Grundkörpers (2) ein weiterer Absatz (15) gebildet ist.

4. Schnellkupplung nach Anspruch 1 - 3,
dadurch gekennzeichnet,
daß im Außenumfang (16) des Grundkörpers (2) ein Absatz (17) zur Aufnahme des Mediumschlauches (3) und der diesen umgebenden Hülle (4) angeordnet ist.

5. Schnellkupplung nach Anspruch 4,
dadurch gekennzeichnet,
daß der Grundkörper (2) mit einer angeformten Muffe (16) ausgebildet ist.

6. Schnellkupplung nach Anspruch 1 - 5,
dadurch gekennzeichnet,
daß die Strömungsachse (18) der Schnellkupplung (1) geradlinig ausgebildet ist.

7. Schnellkupplung nach Anspruch 1 - 5,
dadurch gekennzeichnet,
daß die Schnellkupplung (1) als Winkelstück, mit abgewinkelter Strömungsachse (18) ausgebildet ist.

8. Schnellkupplung nach Anspruch 1 - 7,
dadurch gekennzeichnet,
daß der Grundkörper (2) der Schnellkupplung (1) aus faserverstärktem Polypropylen geschaffen ist.

9. Schnellkupplung nach Anspruch 1 - 8,
dadurch gekennzeichnet,
daß der Grundkörper (2) der Schnellkupplung (1) aus Polyamid geschaffen ist.

10. Schnellkupplung nach Anspruch 1 - 9,
dadurch gekennzeichnet,
daß die Hülle (4) aus faserverstärktem Polypropylen geschaffen ist.

11. Schnellkupplung nach Anspruch 1 - 9,
dadurch gekennzeichnet,
daß die Hülle (4) aus Polyamid geschaffen ist.

12. Schnellkupplung nach Anspruch 1 - 11,
dadurch gekennzeichnet,
daß die Sicherungsscheibe (13) aus Polyamid geschaffen ist.

13. Schnellkupplung nach Anspruch 1 - 12,
dadurch gekennzeichnet,
daß das Dichtelement (12) als Runddichtring bzw. O-Ring vorliegt.

14. Schnellkupplung nach Anspruch 1 - 13,
dadurch gekennzeichnet,
daß das Adapterstück (20) zur Aufnahme der Spange (9) eine Eindrehung (21) aufweist.

15. Schnellkupplung nach Anspruch 1 - 14,
dadurch gekennzeichnet,
daß das Adapterstück (20) ein Bestandteil des Aggregats (5) ist.

## Claims

1. A quick coupling (1) for a hose (3) conveying a fluid medium and for connection to a radiator or a similar assembly, comprising a tubular body (2), the hose (3) to which the latter is connected, an adapter member (20) inserted coaxially in the end region (6) of the body (2) and sealed with a sealing member, and a clip (9) which is widened at the front in the fitting direction and to accommodate which the wall of the end region (6) has a slot (8) penetrating on both sides and which in the locking position engages through the slot (8) into a recess (21) of the adapter member (20), characterised in that the hose (3) is pushed on to the body (2) and is surrounded by a moulded sheath (4), and in that the clip (9) is in the form of a U-shaped resilient insert clip, the two arms of which are widened from a clear internal dimension (19).

2. A quick coupling according to Claim 1, characterised in that a shoulder (11) enlarging the nominal diameter (14) and serving to accommodate a sealing member (12) and a retaining washer (13) is provided in the inner periphery (10) of the end region (6) of the body (2).

3. A quick coupling according to Claim 2, characterised in that a further shoulder (15) is formed between the shoulder (11) and the nominal diameter (14) of the body (2).

4. A quick coupling according to Claims 1 to 3, characterised in that a shoulder (17) for accommodating the medium hose (3) and a sheath (4) surrounding it is provided in the outer periphery (16) of the body (2).

5. A quick coupling according to Claim 4, characterised in that the body (2) is formed with an integrally moulded sleeve (16).

6. A quick coupling according to Claims 1 to 5, characterised in that the flow axis (18) of the quick coupling (1) is linear.

7. A quick coupling according to Claims 1 to 5, characterised in that the quick coupling (1) is formed as an angle member with an angular flow axis (18).

8. A quick coupling according to Claims 1 to 7, characterised in that the body (2) of the quick coupling (1) is made from fibre-reinforced polypropylene.

9. A quick coupling according to Claims 1 to 8, characterised in that the body (2) of the quick coupling (1) is made of polyamide.

10. A quick coupling according to Claims 1 to 9, characterised in that the sheath (4) is made from fibre-reinforced polypropylene.

11. A quick coupling according to Claims 1 to 9, characterised in that the sheath (4) is made from polyamide.

12. A quick coupling according to Claims 1 to 11, characterised in that the retaining washer (13) is made from polyamide.

13. A quick coupling according to Claims 1 to 12, characterised in that the sealing member (12) is a circular sealing ring or O-ring.

14. A quick coupling according to Claims 1 to 13, characterised in that the adapter member (20) has a recess (21) for accommodating the clip (9).

15. A quick coupling according to Claims 1 to 14, characterised in that the adapter member (20) is a component of the assembly (5).

## Revendications

1. Accouplement rapide (1) pour un tuyau (3) véhiculant un milieu fluide, pour la liaison à un dispositif de refroidissement ou à une unité semblable, constitué par un corps de base tubulaire (2), un tuyau (3) relié à ce corps, un élément adaptateur (1) inséré coaxialement dans la partie de tête (6) du corps de base (2) et fermé de façon étanche par un élément d'étanchéité, ainsi qu'une agrafe (9) qui présente un élargissement vers l'avant dans la direction d'enfichage et pour le logement de laquelle la paroi de la partie de tête (6) possède une fente traversant (8) située des deux côtés, et qui, dans la position de blocage, s'engage à travers la fente (8) dans une gorge usinée au tour (21) de l'élément adapteur (20), caractérisé en ce que le tuyau (3) est emmanché sur le corps de base (2) et est entouré par une gaine (4) moulée par injection et que l'agrafe (9) est réalisée sous la forme d'un étrier élastique enfichable en forme de U, dont les deux branches d'élargissent à partir d'une ouverture intérieure de passage (19).

2. Accouplement rapide selon la revendication 1, caractérisé en ce que dans la périphérie intérieure (10) de la partie de tête (6) du corps de base (2) est disposé un épaulement (11) qui augmente le diamètre nominal (14) et sert à loger un élément d'étanchéité (12) et une rondelle de fixation (13).

3. Accouplement rapide selon la revendication 2, caractérisé en ce qu'un autre épaulement (15) est formé entre l'épaulement (11) et la partie de diamètre nominal (14) du corps de base (2).

4. Accouplement rapide selon les revendications 1-3, caractérisé en ce que dans la périphérie extérieure (16) du corps de base (2) est disposé un épaulement (17) servant à recevoir le tuyau (3) véhiculant le fluide et la gaine (4) entourant ce tuyau.

5. Accouplement rapide selon la revendication 4, caractérisé en ce que le corps de base (2) est réalisé avec un manchon (16) formé par moulage.

6. Accouplement rapide selon la revendication 1-5, caractérisé en ce que l'axe d'écoulement (18) de l'accouplement rapide (1) est rectiligne.

7. Accouplement rapide selon les revendications 1-5, caractérisé en ce que l'accouplement rapide (1) est réalisé sous la forme d'une pièce coudée, qui possède un axe d'écoulement coudé (18).

8. Accouplement rapide selon les revendications 1-7, caractérisé en ce que le corps de base (2) de l'accouplement rapide (1) est réalisé en polypropylène renforcé par des fibres.

9. Accouplement rapide selon les revendications 1-8, caractérisé en ce que le corps de base (2) de l'accouplement rapide (1) est réalisé en polyamide.

10. Accouplement rapide selon les revendications 1-9, caractérisé en ce que la gaine (4) est formée par du polypropylène renforcé par des fibres.

11. Accouplement rapide selon les revendications 1-4, caractérisé en ce que la gaine (4) est réalisée en polyamide.

12. Accouplement rapide selon les revendications 1-11, caractérisé en ce que la rondelle de sécurité (13) est réalisée en polyamide.

13. Accouplement rapide selon les revendications 1-12, caractérisé en ce que l'élément d'étanchéité (12) est réalisé sous la forme d'une bague d'étanchéité circulaire ou d'un joint torique.

14. Accouplement rapide selon les revendications 1-13, caractérisé en ce que l'élément adaptateur (20) servant à recevoir l'agrafe (9) comporte une gorge usinée au tour (21).

15. Accouplement rapide selon les revendications 1-14, caractérisé en ce que l'élément adaptateur (20) est une partie constitutive de l'ensemble (5).
